Europäisches Patentamt

**European Patent Office**

**Office européen des brevets**

(11) Numéro de publication : **0 235 051**
**B1**

(12) **FASCICULE DE BREVET EUROPÉEN**

(45) Date de publication du fascicule du brevet :
13.12.89

(21) Numéro de dépôt : **87420016.5**

(22) Date de dépôt : **15.01.87**

(51) Int. Cl.⁴ : **B 01 D 13/04**, B 01 D 53/22,
D 01 D 5/24

(54) **Fibre creuse composite pour enlever de la vapeur d'eau à de l'air ou à du gaz carbonique.**

(30) Priorité : 05.02.86 FR 8601741

(43) Date de publication de la demande :
02.09.87 Bulletin 87/36

(45) Mention de la délivrance du brevet :
13.12.89 Bulletin 89/50

(84) Etats contractants désignés :
AT BE CH DE FR GB IT LI LU NL SE

(56) Documents cités :
FR-A- 2 541 586
FR-A- 2 566 003
GB-A- 2 100 181
GB-A- 2 134 814
US-A- 4 444 571
CHEMICAL ABSTRACTS, vol. 102, no. 14, 8 avril 1985,
page 64, no. 114810u, Columbus, Ohio, US; & JP-A-59
203 602 (ASAHI CHEMICAL INDUSTRY CO., LTD) 17-
11-1984

(73) Titulaire : **RHONE-POULENC RECHERCHES**
**25 Quai Paul Doumer**
**F-92408 Courbevoie Cedex (FR)**

(72) Inventeur : **Fabre, Albert**
**37, rue Auguste Renoir**
**F-69200 Venissieux (FR)**

(74) Mandataire : **Vogt, Bernard et al**
**RHONE-POULENC INTERSERVICES Service Brevets**
**Chimie Centre de Recherches de Saint-Fons B.P. 62**
**F-69192 Saint-Fons Cédex (FR)**

Jouve, 18, rue St-Denis, 75001 Paris, France

## Description

La présente invention concerne une fibre creuse ayant des propriétés particulièrement intéressantes pour deshumidifier de l'air ou du gaz carbonique, ainsi que pour rendre conforme aux normes de salubrité de l'air contenant en plus de la vapeur d'eau des solvants volatils solubles dans l'eau, comme par exemple le diméthylformamide ou la N-méthylpyrrolidone.

Le besoin d'une telle fibre creuse composite est manifeste dans l'industrie pour enlever la vapeur d'eau contenue dans le gaz carbonique, pour rendre plus salubre l'atmosphère des ateliers de fabrication, pour le conditionnement de l'air (degré hygrométrique).

Le but de la présente invention est donc une fibre creuse composite spécialement adaptée aux applications envisagées citées ci-avant.

Un autre but de la présente invention est une fibre creuse composite qui peut être obtenue facilement industriellement.

Un autre but de la présente invention est une fibre creuse composite pouvant être utilisée pour les applications citées ci-avant même en opérant sous de faibles différences de pressions entre l'intérieur et l'extérieur desdites fibres creuses composites.

Un autre but de la présente invention est une fibre creuse composite présentant d'importants facteurs de sélectivité $H_2O$/air ou $H_2O/CO_2$, de l'ordre de 50 à 1 000 par exemple, c'est-à-dire que la perméabilité de la fibre creuse composite à la vapeur d'eau est de 50 à 1 000 fois supérieure à la perméabilité de la même fibre creuse composite au $CO_2$ ou à l'air.

Un autre but de la présente invention est une fibre creuse composite qui présente une grande perméabilité à la vapeur d'eau, comprise entre 1,5 et 45,1 × 10$^{-5}$ cm$^3$/cm$^2$/S.Pa, 200 et 5 000 × 10$^{-5}$ cm$^3$/cm$^2$ s. cm Hg) et de préférence entre 1,6 et 9 × 10$^{-5}$ cm$^2$ S.Pa (220 et 1 000 × 10$^{-5}$ cm$^3$/cm$^2$ s. cm Hg) (cm$^3$ de vapeur d'eau par cm$^2$ de membrane sous forme de fibre creuse composite, par seconde, pour 1 Pa de pression différentielle).

Un autre but de la présente invention est une fibre creuse composite qui peut être utilisée dans les applications citées ci-avant en faisant circuler le gaz (ou mélange de gaz) humide à traiter au contact de la paroi interne de la fibre creuse composite, tandis que le gaz enrichi en vapeur d'eau est recueilli sur la paroi externe de la même fibre creuse composite.

Un autre but de la présente invention est une fibre creuse composite permettant les applications envisagées ci-avant, même en opérant à des températures correspondant à la température ambiante.

Il a donc été trouvé et c'est ce qui fait l'objet de la présente invention une fibre creuse composite, utilisable notamment pour enlever de la vapeur d'eau à de l'air ou à du gaz carbonique, caractérisée en ce qu'elle est constituée par :

a) une fibre creuse asymétrique polymérique n'ayant aucune sélectivité pour la vapeur d'eau comprise dans l'air ou dans le gaz carbonique, dont le diamètre interne est compris entre 130 et 900 micromètres et dont le diamètre externe est compris entre 450 et 1 500 micromètres, ladite fibre creuse asymétrique comprenant :

— une couche poreuse, constituée d'alvéoles en communication entre elles, dont les plus grandes dimensions sont inférieures à 125 micromètres dont les dimensions moyennes sont comprises entre 0,5 et 20 micromètres et dont le volume des alvéoles représente 30 à 70 % du volume de la fibre creuse asymétrique,

— une couche dense dont le diamètre des pores est inférieur à 0,05 micromètre et dont l'épaisseur est compris entre 0,1 et 1 micromètre,

b) une couche de revêtement polymérique dont l'épaisseur est comprise entre 0,15 et 25 micromètres, ladite couche de revêtement étant sur la couche dense de la fibre creuse asymétrique, la dite fibre creuse composite étant caractérisée de plus par le fait de présenter une perméabilité bien plus élevée à la vapeur d'eau qu'à l'air ou au gaz carbonique et par le fait de ne présenter pratiquement aucune sélectivité pour l'oxygène et l'azote de l'air.

Les fibres creuses asymétriques (supportant la couche de revêtement) peuvent être obtenues à partir d'une pluralité de polymères. A titre indicatif on peut citer :

— les polymères fluorés comme par exemple le polyfluorure de vinylidène, le polychlorotrifluoroéthylène, les copolymères de dichlorodifluoroéthylène et de chlorotrifluoroéthylène,

— les polysulfones, comme par exemple les polysulfones aromatiques, les polyaryléthersulfones décrites dans le brevet français 1 407 301, la polyéthersulfone commercialisée par la société Union Carbide sous la marque commerciale UDEL 1700 ou UDEL 3500, les polysulfones sulfonées décrites dans le brevet américain 3 709 841 de la Société Rhône-Poulenc, les mélanges de polysulfones et de polysulfones sulfonées décrits dans le brevet américain n° 4,207,182 de Rhône-Poulenc,

— les polyarylèneéthers, tels que par exemple celle commercialisée par Union Carbide sous le nom commercial PKHH,

— les esters cellulosiques, comme par exemple le diacétate de cellulose, le triacétate de cellulose et leurs mélanges,

— les polymères à base d'acrylonitrile, ainsi que les copolymères d'acrylonitrile et leurs mélanges, comme par exemple le copolymère à base d'acrylonitrile, de méthacrylate de méthyle et de méthallylsulfonate de sodium, les copolymères à base d'acrylonitrile et de méthallylsulfonate de sodium, ainsi que les mélanges de polymères anioniques et cathioniques tels que ceux décrits par exemple dans le brevet français n° 2 144 922 de la société Rhône-Poulenc,

— les polyvinyltriorganosilanes, tels que ceux décrits dans le brevet français 2 082 095, comme par exemple le polyvinyltriméthylsilane ainsi que leurs copolymères, comme par exemple les copolymères de vinyltriméthylsilane avec du vinyldiméthyléthylsilane ou du vinyldiméthylpropylsilane ou du vinyldiméthylbutylsilane, ou du vinyldiméthylphénylsilane...

Les fibres creuses asymétriques (supportant la couche de revêtement) sont obtenues par des procédés connus, notamment en faisant une solution généralement inférieure à 30 % en poids, du polymère utilisé, puis en extrudant cette solution à travers une filière annulaire. Les solvants utilisés peuvent être le diméthylformamide, le diméthylsulfoxyde, le diméthylacétamide, la N-méthylpyrrolidone. On procède dès la formation de la fibre creuse à une coagulation interne ou externe, soit en injectant dans la fibre un liquide de coagulation soit en passant la fibre obtenue dans un bain de coagulation. Le liquide de coagulation peut être par exemple de l'eau, avec éventuellement, en faible proportion, des solvants aprotiques polaires tels que par exemple le diméthyformamide ou le diméthylsulfoxyde.

Les fibres creuses asymétriques ont un diamètre interne compris entre 130 et 900 micromètres et un diamètre externe compris entre 450 et 1 500 micromètres.

Ces fibres creuses asymétriques ont une couche poreuse et une couche dense, cette dernière étant sur la paroi externe ou sur la paroi interne des fibres creuses asymétriques. La couche dense a une épaisseur comprise entre 0,1 et 1 micromètre et des pores dont le diamètre est inférieur à 0,05 micromètre. La couche poreuse est constituée d'alvéoles, en communication entre elles, dont les plus grandes dimensions sont inférieures à 125 micromètres, de préférence, inférieures à 100 micromètres. Ces alvéoles n'ont pas de forme géométrique bien définie et c'est pour cela que le terme diamètre de pores n'est pas utilisé. Le volume des alvéoles (porosité) représente entre 30 et 70 % du volume de la fibre creuse asymétrique et au moins 80 % de ces alvéoles ont des dimensions comprises entre 0,5 et 20 micromètres. Les fibres creuses asymétriques n'ont aucune sélectivité pour la vapeur d'eau comprise dans l'air ou dans le gaz carbonique, ce qui signifie que la perméabilité des fibres creuses asymétriques est la même pour la vapeur d'eau que pour le gaz carbonique et que pour l'air, autrement dit le facteur de séparation eau/air ou eau/CO$_2$ est égal à 1.

La couche de revêtement polymérique, sur la couche dense de la fibre creuse asymétrique, a une épaisseur comprise entre 0,15 et 25 micromètres, de préférence entre 0,5 et 15 micromètres.

Les polymères susceptibles d'être utilisés pour la réalisation de la couche de revêtement comprennent notamment :

— les polysiloxanes, comme par exemple les polydiméthylsiloxanes ou des polysiloxanes comprenant des substituants alkyle et aryle sur l'atome de silicium,

— les copolymères de diméthylsiloxane et de silphénylène tels que ceux décrits dans le brevet français n° 2 414 519 de Rhône-Poulenc,

— des copolymères de diméthylsiloxane et de polyuréthane,

— des copolymères organopolysiloxane/polycarbonate,

— des polyvinylpyridines et leurs copolymères par exemple avec le styrène,

— des polyvinyltriorganosilanes et leurs copolymères tels que ceux décrits ci-avant et pouvant être utilisés pour la réalisation de fibres creuses asymétriques.

Concernant la couche de revêtement, il doit être précisé que son épaisseur n'est pas déterminée (par des photos prises) au microscope électronique à balayage. En effet l'examen d'une coupe transversale d'une fibre creuse, enduite intérieurement ou extérieurement par du polydiméthylsiloxane, après métallisation de l'échantillon, ne permet pas de différencier nettement la couche de polydiméthylsiloxane de la couche dense de la fibre creuse asymétrique. Aussi la demanderesse préfère faire état d'un poids de polydiméthylsiloxane déposé par unité de surface, ce poids étant déterminé par pesée des fibres avant et après enduction ; cette valeur, dans les exemples suivants, est exprimée en grammes de polydiméthylsiloxane déposés par mètre carré de surface membranaire. La densité du polydiméthylsiloxane étant voisine de 1, on admettra que 1 g/m$^2$ déposé correspond à une épaisseur théorique de 1 micron.

Exemple 1

On met en solution 280 g de polyfluorure de vinylidène (commercialisé par la Société ATOCHEM sous le nom commercial FORAFLON 1000 HD) dans 720 g de N-méthylpyrrolidone.

On filtre cette solution à travers un filtre de diatrose de marque commerciale WRJ commercialisé par la société LA ROCHETTE-CENPA et on la file sous forme de fibre creuse en extrudant par l'intermédiaire d'une pompe à engrenages au travers d'une filière annulaire ayant un diamètre externe de 0,85 mm et un poinçon central de diamètre interne 0,15 mm pour un diamètre externe de 0,250 mm. On injecte par le poinçon central de la filière une solution aqueuse à 25 % en poids de N-méthylpyrrolidone, cette solution permettant de maintenir la section de fibre parfaitement ronde et régulière.

Après passage à l'air à 23 °C, pendant une demi seconde la fibre creuse pénètre dans un bain coagulant externe, comprenant de l'eau à 30 °C.

Cette fibre est ensuite lavée à l'eau déminéralisée, étirée au taux de 1,18 puis séchée à 50 °C pendant 24 heures.

La fibre creuse asymétrique ainsi obtenue a un diamètre externe de 0,558 mm et un diamètre interne de 0,195 mm. La couche dense, à l'extérieur de la fibre, a une épaisseur de 0,35 micromètre tandis que la couche poreuse sous la couche dense comprend des alvéoles dont les dimensions les plus grandes sont inférieures à 100 micromètres. La majeure partie de ces alvéoles, soit 90 % d'entre elles, ont des dimensions comprises entre 1 et 20 micromètres.

La porosité (volume de vide) de la fibre creuse est de 60 %. Cette fibre creuse asymétrique n'a aucune perméabilité à l'eau liquide sous une pression différentielle de $2 \times 10^5$ Pa (2 bars) et n'a aucune sélectivité pour la vapeur d'eau comprise dans l'air ou dans le gaz carbonique.

Cette fibre creuse asymétrique est alors enduite extérieurement (sur la couche dense) par immersion dans une solution à 10 % en poids dans le cyclohexane de polydiméthylsiloxane (appelé silicone) commercialisé par la Société Rhône-Poulenc sous la marque RHODORSIL CAF 3B. Après vulcanisation à température ambiante pendant une nuit, on procède à un séchage à 60 °C pendant 24 heures pour éliminer le solvant résiduel. Le poids de silicone ainsi déposé est de 9 g/m² ce qui correspond à une épaisseur théorique de la couche de revêtement de 9 microns.

La fibre creuse composite obtenue a une perméabilité à la vapeur d'eau de $95 \times 10^{-5}$ cm³/cm² S.Pa ($260 \times 10^{-5}$ cm³/cm² s. cm Hg) et un facteur de sélectivité $H_2O$ vapeur/air égal à 70.

La fibre creuse est coupée en tronçons de fibres creuses de 35 cm de longueur qui sont assemblés en un faisceau de 55 fibres que l'on dispose dans une enceinte externe tubulaire et que l'on scelle aux deux extrémités de manière connue avec de la colle époxy-polyuréthane. L'appareil obtenu, appelé perméateur, comprend deux tubulures sur l'enceinte externe qui permettent de faire circuler de l'air sur la paroi externe des fibres creuses composites, donc sur la couche de revêtement en polydiméthylsiloxane, et il comprend deux tubulures en communication avec les extrémités du faisceau, donc avec l'intérieur des fibres creuses.

Le perméateur obtenu a une surface membranaire calculée à partir du diamètre extérieur des fibres creuses de 0,03 m² et il a été utilisé pour enlever de la vapeur d'eau à de l'air contenant 21 % d'oxygène par rapport à l'azote. On opère de la manière suivante :

— l'air à 20 °C et à un degré hygrométrique de 95 % entre dans l'appareil par l'une des tubulures latérales situées sur l'enceinte et sort par la seconde tubulure (situées sur l'enceinte) sur laquelle est placée une vanne qui permet de créer une perte de charge sur le circuit,

— on ferme par une vanne l'une des tubulures en communication avec les extrémités du faisceau et par la tubulure située à l'autre extrémité du faisceau on fait en sorte, grâce à une pompe à vide, que la pression absolue à l'intérieur des fibres soit de 1 500 Pa (15 millibars),

— on règle la perte de charge sur le circuit de l'air qui circule à l'extérieur des fibres de façon à ce que la pression absolue à l'extérieur des fibres soit de $2 \times 10^5$ Pa (2 bars).

L'air qui sort du perméateur après avoir circulé au contact de la couche de revêtement à l'extérieur des fibres composites, sans les avoir traversé, a un débit de 90 l/h (litres par heure) et son degré hygrométrique est de 40 %. Cet air sortant du perméateur a la même teneur en oxygène par rapport à l'azote que l'air entrant dans l'appareil.

Exemple 2

On prend la même solution que celle de l'exemple 1 et on la file dans une filière annulaire de diamètre extérieur de 1,93 mm et dont le poinçon central présente un diamètre intérieur de 0,5 mm et un diamètre extérieur de 1,187 mm.

Le liquide de coagulation interne injecté dans la fibre est de l'eau déminéralisée. Le bain dans lequel la fibre passe est une solution aqueuse à 25 % en poids de N-méthylpyrrolidone.

Après les mêmes conditionnements que ceux de l'exemple 1, la fibre creuse asymétrique obtenue a une couche dense interne et ses autres caractéristiques sont les mêmes que celles de la fibre creuse obtenue dans l'exemple 1, la couche poreuse étant à l'extérieur de cette fibre creuse.

La fibre a les dimensions suivantes :
diamètre externe : 0,980 mm,
diamètre interne : 0,612 mm,
épaisseur de parois : 0,184 mm.

La fibre creuse est coupée en tronçons de 35 cm qui sont disposés en un faisceau rectiligne de 50 fibres dans une enceinte tubulaire. Le faisceau est scellé aux extrémités de l'enceinte à l'aide de colle époxy-polyuréthane comme dans l'exemple 1 et les extrémités des fibres du faisceau sont ouvertes par tranchage. On fait circuler alors une solution de polydiméthylsiloxane à l'intérieur des fibres pour obtenir la couche de revêtement interne. La solution de polydiméthylsiloxane est une solution à 10 % dans le cyclohexane du silicone commercialisé par la société Rhône-Poulenc sous la marque commerciale RHODORSIL CAF 3B. Après vulcanisation à température ambiante pendant 24 heures, on sèche en faisant passer un courant d'air à 50 °C à l'intérieur des fibres pendant 24 heures.

Le poids de silicone déposé est de 9 g/m², ce qui correspond à une couche de revêtement dont l'épaisseur théorique est de 9 micromètres.

La fibre creuse composite ainsi obtenue a une perméabilité à la vapeur d'eau de $1,95 \times 10^{-5}$ cm³/cm² S.Pa ($260 \times 10^{-5}$ cm³/cm² s. cm Hg) et un facteur de sélectivité $H_2O$(vapeur)/air égal à 70.

On utilise cet appareil dont la surface d'échange calculée à partir du diamètre interne des fibres composites (ayant leur couche de revêtement à l'intérieur des fibres) est de 0,03 m² pour deshumidifier de l'air. Pour cela on opère de la façon suivante :

— on introduit à l'une des extrémités du faisceau et à la température de 20 °C de l'air à un degré hygrométrique de 95 %. A l'autre extrémité une vanne permet de contrôler la pression appliquée à l'intérieur de la fibre. Par les tubulures latérales situées sur l'enceinte on applique à l'extérieur des fibres, par l'intermédiaire d'une pompe à vide, une pression absolue de 1 500 Pa (15 millibars). On règle la pression à l'intérieur des fibres de façon à obtenir une pression absolue de $2 \times 10^5$ Pa (2 bars). Dans ces conditions le débit d'air qui circule à l'intérieur des fibres (sans les traverser) est mesuré à la sortie du perméateur. On obtient un débit de 70 l/h et cet air de sortie a un degré hygrométrique de 30 %. Cet air sortant du perméateur a le même rapport $O_2/N_2$ que l'air entrant dans l'appareil.

Exemple 3

On prépare une solution à 21 % en poids, dans un mélange de dichlorométhane et de N-méthylpyrrolidone à 20/80 en poids, de polyacétate de cellulose dont l'indice d'acétyle est de 55 % et dont la viscosité, à 23 °C, en solution dans l'acétone à 12 % P/P est de 297 centipascal par seconde. Après filtration de cette solution sur diatrose de marque commerciale vendue par la société LA ROCHETTE CENPA WRJ on la file à travers une filière annulaire de diamètre externe 1,93 mm et dont le poinçon central présente un diamètre interne de 0,5 mm et un diamètre externe de 1,187 mm. Par le poinçon de la filière on injecte, à 10 °C au centre de la fibre un mélange d'eau et de N-méthylpyrrolidone à 90/10 poids/poids. Après un passage à l'air pendant 0,3 seconde la fibre est introduite dans un bain coagulant d'eau déminéralisée à 5 °C. A la sortie du bain coagulant on étire la fibre de 27 % dans un bain d'eau à 35 °C puis on la passe sur des rouleaux laveurs sur lesquels la fibre est lavée à l'eau déminéralisée pendant 5 minutes, puis bobinée et immergée dans de l'eau déminéralisée pour subir un lavage supplémentaire de 24 heures.

Après lavage cette fibre est séchée à 50 °C pendant 24 heures. La fibre creuse asymétrique obtenue a :
  un diamètre externe : 1,137 mm,
  un diamètre interne : 0,715 mm,
  une épaisseur de parois : 0,211 mm.
La couche dense, à l'extérieur de la fibre a une épaisseur de 0,15 micromètre. La couche poreuse comprend des alvéoles dont les plus grandes dimensions sont de 50 micromètres. La majeure partie, soit 90 %, de ces alvéoles ont des dimensions comprises entre 1 et 20 micromètres. La porosité (volume de vide de cette fibre creuse asymétrique est de 70 %.

Cette fibre est alors enduite extérieurement de polydiméthylsiloxane par immersion dans une solution à 5 % d'un polysilocane de marque CAF 3B dans le cyclohexane. Après vulcanisation à température ambiante pendant 8 heures on sèche à 60 °C pendant 24 heures. Le poids de silicone déposée est de 4 g/m², ce qui correspond à une couche de revêtement ayant une épaisseur théorique de 4 micromètres.

La perméabilité de cette fibre creuse composite à la vapeur d'eau est de $6 \times 10^{-5}$ cm³/cm² S.Pa ($800 \times 10^{-5}$ cm³/cm² s. cm Hg) et le facteur de sélectivité $H_2O$/air est égal à 1 000. Les perméabilités à l'oxygène et à l'azote sont équivalentes et égales à $6 \times 10^{-8}$ cm³/cm² S.Pa ($0,8 \times 10^{-5}$ cm³/cm² s. cm Hg).

Un faisceau de 30 de ces fibres est scellé dans un perméateur, par une colle époxy-polyuréthane, aux deux extrémités. La surface d'échange obtenue calculée à partir de la surface externe des fibres est de 0,033 m².

Ce perméateur est utilisé, comme dans l'exemple 1 pour enlever de la vapeur d'eau à de l'air à 20 °C et dont le degré hygrométrique est de 95 %. Pour cela on introduit par l'une des tubulures latérales du perméateur l'air à traiter dont la teneur en oxygène par rapport à l'azote est de 21 %. L'air, après avoir circulé au contact de la couche de revêtement des fibres creuses composites, sort du perméateur par la seconde tubulure (située latéralement sur l'enceinte) munie d'une vanne qui permet d'établir une pression à l'intérieur de l'enceinte, donc à l'extérieur des fibres creuses composites. On ferme par une vanne l'une des tubulures en communication avec les extrémités du faisceau de fibres creuses et on relie la seconde extrémité (du faisceau) à une pompe à vide qui permet d'établir une pression absolue de 1 000 Pa (10 millibars) à l'intérieur des fibres. On règle la pression dans l'enceinte de manière à obtenir une pression égale à $2 \times 10^5$ Pa (2 bars) en valeur absolue.

On mesure alors le débit de l'air qui a circulé à l'extérieur des fibres (sans les traverser) à sa sortie de l'enceinte ; ce débit est de 100 l/h et le degré hygrométrique de l'air obtenu est de 40 %. La teneur en oxygène de cet air (par rapport à l'azote) est la même que celle de l'air introduit dans le perméateur.

Exemple 4

On reprend la solution de diacétate de cellulose de l'exemple 3 que l'on file dans la même filière, mais on modifie les conditions de coagulation de façon à ce que la couche dense de la fibre creuse asymétrique soit maintenant à l'intérieur de la fibre. Pendant le filage on injecte donc à l'intérieur de la fibre de l'eau déminéralisée à 5 °C, puis après passage de la fibre pendant 0,3 seconde à l'air on la plonge dans un bain, à 10 °C, composé d'un mélange eau/N-méthylpyrrolidone (90/10 au poids).

La fibre creuse subit un traitement identique à celui de l'exemple 3 et après séchage elle présente les caractéristiques suivantes :
  diamètre externe : 1,137 mm,
  diamètre interne : 0,715 mm.
Cette fibre creuse asymétrique présente au microscope électronique à balayage une couche dense, d'épaisseur 0,15 micromètre sur sa paroi interne. La couche poreuse comprend des alvéoles dont les plus grandes dimensions sont de 50 microns et dont 90 % d'entre elles ont des dimensions entre 1 et 20 micromètres. La porosité de cette fibre est de 65 %.

La fibre creuse asymétrique est coupée en tronçons de 35 cm de long et 50 de ces tronçons sont disposés en un faisceau rectiligne dans une enceinte tubulaire (perméateur). Le faisceau est scellé aux deux extrémités dans l'enceinte à l'aide d'une colle époxy-polyuréthane comme dans les exemples précédents. Les extrémités des fibres du faisceau sont ouvertes par tranchage d'une partie de la masse de la colle après sa prise.

On fait alors circuler à l'intérieur des fibres une solution à 10 % dans le cyclohexane de polydiméthylsiloxane pour obtenir une couche de revêtement interne. Le polydiméthylsiloxane est une résine silicone commercialisée par la Société Rhône-Poulenc sous la marque RHODORSIL CAF 3B. Après vulcanisation 24 heures à température ambiante, on sèche en faisant circuler dans les fibres un courant d'air à 50 °C pendant 24 heures. Le poids de silicone déposé est de 6 g/m² ce qui correspond à une couche de revêtement théorique de 6 microns.

La fibre creuse composite ainsi obtenue a une perméabilité à la vapeur d'eau $4,5 \times 10^{-5}$ cm³/cm² S.Pa de $(500 \times 10^{-5}$ cm³/cm² s. cm Hg) et un facteur de sélectivité de $H_2O$/air × 560.

On utilise cet appareil, dont la surface d'échange calculée à partir du diamètre intérieur des fibres est de 0,035 m², pour déshydrater de l'air.

On introduit à l'intérieur des fibres par l'une des extrémités du faisceau, à 20 °C, de l'air dont le degré hygrométrique est de 95 %. A l'autre extrémité de l'appareil, une vanne, placée sur la tubulure de sortie, permet d'établir une pression contrôlée à l'intérieur des fibres. Par les tubulures latérales placées sur l'enceinte on applique à l'extérieur des fibres, par l'intermédiaire d'une pompe à vide, une pression absolue 1 000 Pa de (10 millibars). On règle la pression à l'intérieur des fibres pour avoir une pression absolue de $2 \times 10^5$ Pa (2 bars).

Le débit de l'air ayant circulé à l'intérieur des fibres et sortant du faisceau est de 100 l/h et son degré hygrométrique est de 35 %. Le rapport $O_2/N_2$ de cet air sortant du faisceau est le même que celui entrant dans le faisceau.

Exemple 5

On utilise un perméateur identique à celui de l'exemple 4 pour extraire de l'eau du gaz carbonique. Pour cela on introduit à l'une des extrémités du faisceau, à l'intérieur des fibres composites, un courant de gaz carbonique au degré hygrométrique de 98 % et à 20 °C. Comme dans l'exemple 4 on opère avec une pression absolue de 1 000 Pa (10 millibars) à l'extérieur des fibres et une pression absolue de $2 \times 10^5$ Pa (2 bars) à l'intérieur. Après 2 heures de fonctionnement le débit de gaz carbonique à la sortie du perméateur, c'est-à-dire le débit de gaz carbonique ($CO_2$) sortant des fibres creuses composites à l'autre extrémité du faisceau, est de 80 l/h et le degré hygrométrique du $CO_2$ obtenu est de 31,5 %.

Exemple 6

On utilise un perméateur identique à celui de l'exemple 2 pour extraire de la vapeur d'eau et du diméthylformamide (DMF) à de l'air. Pour cela on introduit à 20 °C, à l'une des extrémités du faisceau, à l'intérieur ces fibres composites, un courant d'air (chargé de vapeurs de DMF) à un degré hygrométrique (EH) de 95 %, cet air comprenant 100 mg de DMF par m³. Comme dans l'exemple 4, on opère avec une pression absolue de 1 000 Pa (10 millibars) à l'extérieur des fibres et une pression absolue de $2 \times 10^5$ Pa (2 bars) à l'intérieur des fibres. Après 2 heures de fonctionnement le débit de l'air à la sortie du perméateur, à 20 °C, est de 100 l/h. Cet air recueilli, qui a circulé à l'intérieur des fibres composites, a un degré hygrométrique de 30 % et une teneur en DMF de 25 mg/m³. Le rapport $O_2/N_2$ de cet air, partiellement déshumidifié et rendu plus salubre, est le même que celui de l'air à traiter entrant dans le perméateur à l'autre extrémité du faisceau de fibres composites.

**Revendications**

1. Fibre creuse composite, utilisable notamment pour enlever de la vapeur d'eau à de l'air ou à du gaz carbonique, caractérisée en ce qu'elle est constituée par :

a) une fibre creuse asymétrique polymérique n'ayant aucune sélectivité pour la vapeur d'eau comprise dans l'air ou dans le gaz carbonique, dont le diamètre interne est compris entre 130 et 900 micromètres et dont le diamètre externe est compris entre 450 et 1 500 micromètres, ladite fibre creuse asymétrique comprenant :

— une couche poreuse, constituée d'alvéoles en communication entre elles, dont les plus grandes dimensions sont inférieures à 125 micromètres, dont au moins 80 % des alvéoles ont des dimensions comprises entre 0,5 et 20 micromètres et dont le volume des alvéoles représente 30 à 70 % du volume de la fibre creuse asymétrique,

— une couche dense dont le diamètre des pores est inférieur à 0,05 micromètre et dont l'épaisseur est comprise entre 0,1 et 1 micromètre ;

b) une couche de revêtement polymérique dont l'épaisseur est comprise entre 0,15 et 25 micromètres, ladite couche de revêtement étant sur la couche dense de la fibre creuse asymétrique, la dite fibre creuse composite étant caractérisée de plus par le fait de présenter une perméabilité bien plus élevée à la vapeur d'eau qu'à l'air ou au gaz carbonique et par le fait de ne présenter pratiquement aucune sélectivité pour l'oxygène et l'azote de l'air.

2. Fibre creuse composite selon la revendication 1 caractérisée en ce que la couche de revêtement est sur la paroi externe de la fibre creuse asymétrique.

3. Fibre creuse composite selon la revendication 1 caractérisée en ce que la couche de revêtement est sur la paroi interne de la fibre creuse asymétrique.

4. Fibre creuse composite selon l'une quelconque des revendications 1 à 2 caractérisée en ce que la couche de revêtement est déposée sur la couche dense de la fibre creuse asymétrique par trempage de cette dernière dans une solution polymérique.

5. Fibre creuse composite selon la revendication 3 caractérisée en ce que la couche de revêtement est déposée sur la couche dense de la fibre creuse asymétrique par passage dans la fibre creuse d'une solution polymérique.

6. Fibre creuse composite selon l'une quelconque des revendications 1 à 2 caractérisée en ce que la fibre creuse asymétrique est en un polymère choisi parmi le polyfluorure de vynilidène, les polysulfones sulfonées, les polysulfones et leurs mélanges et le diacétate de cellulose.

7. Fibre creuse composite selon l'une quelconque des revendications précédentes caractérisée en ce que la couche de revêtement est en polysiloxane ou en un copolymère contenant au moins 60 % de motifs siloxane.

8. Fibre creuse composite selon l'une quelconque des revendications précédentes caractérisée en ce que son facteur de séparation eau/air est compris entre 50 et 1 000.

9. Fibre creuse composite selon l'une quelconque des revendications précédentes caractérisée en ce que la fibre creuse asymétrique, en polyfluorure de vinylidène, ne présente aucune perméabilité à l'eau liquide sous une pression différentielle de $2 \times 10^5$ Pa (2 bars).

10. Utilisation des fibres creuses composites selon la revendication 3 pour le conditionnement d'air caractérisée en ce que l'air à traiter chargé de vapeur d'eau passe dans le canal interne des fibres composites et en ce que le perméat enrichi en vapeur d'eau sort par la paroi externe des fibres creuses composite, qui sont dans une enceinte sous une pression inférieure à la pression atmosphérique.

**Claims**

1. Hollow composite fibre capable of being used, in particular, to remove water vapour from the air or from carbon dioxide gas, characterized in that it is constituted by :

a) a hollow asymmetric polymeric fibre which has no selectivity for the water vapour in the air or in carbon dioxide gas, the internal diameter of which is between 130 and 900 micrometres and the external diameter of which is between 450 and 1 500 micrometres, the said hollow asymmetric fibre comprising :

— a porous layer constituted of cells which communicate with each other, in which the largest dimensions are less than 125 micrometres, in which at least 80 % of the cells have dimensions between 0.5 and 20 micrometres, and in which the volume of the cells represents 30 to 70 % of the volume of the hollow asymmetric fibre,

— a dense layer in which the diameter of the pores is less than 0.05 micrometres, and the thickness of which is between 0.1 and 1 micrometres

b) a polymeric coating layer the thickness of which is between 0.15 and 25 micrometres, the said coating layer being on top of the dense layer of the hollow asymmetric fibre, the said hollow composite fibre being characterized in addition in that it has a very much higher permeability to water vapour than to air or to carbon dioxide gas, and in that it has practically no selectivity for the oxygen and the nitrogen in the air.

2. Hollow composite fibre according to Claim 1, characterized in that the coating layer is on the external wall of the hollow asymmetric fibre.

3. Hollow composite fibre according to Claim 1, characterized in that the coating layer is on the internal wall of the hollow asymmetric fibre.

4. Hollow composite fibre according to any one of Claims 1 to 2, characterized in that the coating layer is deposited on the dense layer of the hollow asymmetric fibre by soaking the latter in a polymeric solution.

5. Hollow composite fibre according to Claim 3, characterized in that the coating layer is deposited on the dense layer of the hollow asymmetric fibre by passing a polymeric solution through the hollow fibre.

6. Hollow composite fibre according to any one of Claims 1 to 2, characterized in that the hollow asymmetric fibre is composed of a polymer chosen from vinylidene polyfluoride, the sulphonated polysulphones, the polysulphones and their mixtures, and cellulose diacetate.

7. Hollow composite fibre according to any one of the preceding claims, characterized in that the coating layer is composed of polysiloxane or of a copolymer containing at least 60 % of siloxane residues.

8. Hollow composite fibre according to any one of the preceding claims, characterized in that its water/air separation factor is between 50 and 1 000.

9. Hollow composite fibre according to any one of the preceding claims, characterized in that the hollow asymmetric fibre composed of vinylidene polyfluoride has no permeability to liquid water under a differential pressure of $2 \times 10^5$ Pa (2 bars).

10. Use of the hollow composite fibres according to Claim 3 for air conditioning, characterized in that the air to be treated, which contains water vapour, passes through the internal canal of the composite fibres, and in that the permeate, which is enriched in water vapour, emerges through the external wall of the hollow composite fibres, which are in an enclosure under a pressure which is less than atmospheric pressure.

**Patentansprüche**

1. Verbundhohlfaser, verwendbar insbesondere zur Entfernung von Wasserdampf aus Luft oder Kohlendioxidgas, dadurch gekennzeichnet, daß sie besteht aus :

a) einer polymeren asymmetrischen Hohlfaser, die keine Selektivität für in der Luft oder im Kohlendioxidgas enthaltenen Wasserdampf hat, deren Innendurchmesser zwischen 130 und 900 Mikrometer liegt und deren Aussendurchmesser zwischen 450 und 1 500 Mikrometer liegt, wobei diese asymmetrische Hohlfaser enthält :

— eine poröse Schicht, die aus Alveolen in Verbindung untereinander besteht, deren größte Ausdehnungen unterhalb 125 Mikrometer sind, wovon mindestens 80 % der Alviolen Ausdehnungen zwischen 0,5 und 20 Mikrometer haben und wovon das Volumen der Alveolen 30 bis 70 % des Volumens der asymmetrischen Hohlfaser beträgt,

— eine dichte Schicht, deren Durchmesser der Poren unterhalb 0,05 Mikrometer ist und deren Dicke zwischen 0,1 und 1 Mikrometer beträgt,

b) einer polymeren Überzugsschicht, deren Dicke zwischen 0,15 und 25 Mikrometer beträgt, wobei die Überzugsschicht auf der dichten Schicht der asymmetrischen Hohlfaser ist, und diese zusammengesetzte Hohlfaser außerdem dadurch gekennzeichnet ist, daß sie eine sehr viel höhere Permeabilität für Wasserdampf als für Luft oder Kohlendioxidgas aufweist und dadurch, daß sie praktisch keine Selektivität für den Sauerstoff und den Stickstoff der Luft hat.

2. Verbundhohlfaser gemäß Anspruch 1, dadurch gekennzeichnet, daß die Überzugsschicht auf der Außenwand der asymmetrischen Hohlfaser ist.

3. Verbundhohlfaser gemäß Anspruch 1, dadurch gekennzeichnet, daß die Überzugsschicht auf der Innenwand der asymmetrischen Hohlfaser ist.

4. Verbundhohlfaser gemäß einem der Ansprüche 1 bis 2, dadurch gekennzeichnet, daß die Überzugsschicht auf der dichten Schicht der asymmetrischen Hohlfaser durch Eintauchen der letzteren in eine Polymerlösung abgeschieden wird.

5. Verbundhohlfaser gemäß Anspruch 3, dadurch gekennzeichnet, daß die Überzugsschicht auf der dichten Schicht der asymmetrischen Hohlfaser durch Leiten einer Poylmerlösung in die Hohlfaser abgesetzt wird.

6. Verbundhohlfaser gemäß einem der Ansprüche 1 bis 2, dadurch gekennzeichnet, daß die asymmetrische Hohlfaser aus einem Polymeren, ausgewählt unter Vinylidenpolyfluorid, den sulfonierten Polysulfonen, den Polysulfonen und ihren Gemischen und Cellulosediacetat ist.

7. Verbundhohlfaser gemäß einem der vorhergehenden Ansprüche, dadurch gekennzeichnet, daß die Überzugsschicht aus Polysiloxan oder einem Copolymeren, das mindestens 60 % Siloxangruppierungen enthält, ist.

8. Verbundhohlfaser gemäß einem der vorhergehenden Ansprüche, dadurch gekennzeichnet, daß ihr Trennfaktor Wasser/Luft zwischen 50 und 1 000 beträgt.

9. Verbundhohlfaser gemäß einem der vorhergehenden Ansprüche, dadurch gekennzeichnet, daß die asymmetrische Hohlfaser aus Vinylidenpolyfluorid keine Permeabilität für flüssiges Wasser unter einem Differenzdruck von $2 \times 10^5$ Pa (2 bar) aufweist.

10. Verwendung der Verbundhohlfasern gemäß Anspruch 3 zur Klimatisierung, dadurch gekennzeichnet, daß die mit Wasserdampf beladene zu behandelnde Luft den Innenkanal der Verbundfasern passiert und daß das an Wasserdampf angereicherte Permeat durch die Außenwand der Verbundhohlfasern austritt, welche in einem Behältnis unter einem Druck, niedriger als der Atmosphärendruck, sind.